# EUROPEAN PATENT SPECIFICATION

(11) **EP 3 087 764 B1**
(45) Date of publication and mention of the grant of the patent: **22.03.2017**
(21) Application number: 13900409.7
(22) Date of filing: 23.12.2013
(51) Int. Cl.: H04W 4/06, H04W 72/00, H04W 28/20

(54) **METHODS, USER NODE AND NETWORK NODE IN AN MBMS NETWORK**
VERFAHREN, BENUTZERKNOTEN UND NETZWERKKNOTEN IN EINEM MBMS-NETZWERK
PROCÉDÉS, NOEUD UTILISATEUR ET NOEUD RÉSEAU DANS UN RÉSEAU DE SERVICE DE DIFFUSION MULTIDIFFUSION MULTIMÉDIA (MBMS)

(43) Date of publication of application: 02.11.2016
(73) Proprietor: Telefonaktiebolaget LM Ericsson (publ), 164 83 Stockholm (SE)
(72) Inventor: ÖSTRUP, Peter, S-587 50 Linköping (SE); WERNER, Peter, S-583 34 Linköping (SE)
(74) Representative: Ericsson
(86) International application number: PCT/SE2013/051618
(87) International publication number: WO 2015/099584

(56) References cited:
- EP-A1- 2 234 420
- WO-A1-2008/041928
- WO-A1-2008/050958
- WO-A1-2013/113268
- US-A1- 2008 268 878
- US-A1- 2008 268 878
- US-A1- 2013 258 934
- '3rd Generation Partnership Project; Technical Specification Group GSM/EDGE Radio Access Network;' MULTIMEDIA BROADCAST MULTICAST SERVICE (MBMS) IN THE GERAN XP050906398

## Description

### TECHNICAL FIELD

The disclosure relates to multimedia broadcast multicast service networks and, more specifically, it relates to a user node and a network node allowing for a reduction of signalling load in multimedia broadcast multicast service networks as well as methods for such reduction.

### BACKGROUND

Multimedia Broadcast Multicast Services (MBMS) is a point-to-multipoint interface specification for existing and upcoming 3GPP cellular networks which is designed to provide efficient delivery of broadcast and multicast services, both within a cell as well as within the core networks, such as e.g. Wideband Code Division Multiplex (W-CDMA), Enhanced Data Rates for Global System Global System for Mobile Communication (GSM) Evolution (EDGE), General Packet Radio Service (GPRS), Code Division Multiple Access 2000 (CDMA2000),. Evolved Multimedia Broadcast Multicast Services (eMBMS) is a corresponding specification adapted for Evolved Packet Systems, including (Evolved Universal Terrestrial Radio Access Network) (E-UTRAN) or Long Term Evolution - System Architecture Evolution (LTE-SAE).

For example, on the E-UTRAN-UE (Uu) interface, the MBMS Single Frequency Network (MBSFN) transmission mode applies. This is characterized by synchronous transmission of the same signal from all cells within the MBSFN area, which enables the user equipments (UEs) to combine eMBMS transmission from multiple cells. Transmitting the same data to multiple recipients allows network resources to be shared.

One typical use case for use of any of the specifications mentioned above may be to deliver sport game video content to a large number of mobile phone users which are gathered in a sports stadium or any other location which is attracting a lot of people at the same time. MBMS or eMBMS can use the User Datagram Protocol/protocol via File delivery over Unidirectional Transport (UDP/FLUTE), HLS or DASH as a Download Delivery Method to deliver live TV content to the UEs. Also popular files, such as e.g. Android updates, YouTube clip pre-loadings, or major news events may efficiently be distributed to a large number of recipients in this way.

When broadcasting eMBMS (LTE broadcast) on one or multiple carriers in a deployment scenario with overlapping carriers the following requirements has been defined in 3GPP:
1) Network related behaviour: Support mobility procedures such that interested UE is moved to correct frequency to start MBMS service reception kept on the correct frequency to start/continue MBMS service reception service layer and network provide the UE with reception.
2) UE related behaviour: UE in IDLE mode can perform autonomous frequency prioritization. UE in CONNECTED mode informs the network about its interest (MBMS frequency) in a MBMS Interest Indication message.

As described above, the UE needs to send its MBMS interest for two reasons:
1) The UE is in CONNECTED mode and wants to acquire a MBMS service on another frequency;
2) The UE is currently camping on the MBMS frequency of interest and changed its state from IDLE mode to CONNECTED mode after having performed an RRC connection establishment procedure.

It should be noted that the UE has to send the RRC MBMS INTEREST INDICATION message after each RRC establishment since the eNB needs to be informed about the UEs MBMS interest. Without this knowledge, the eNB might perform a load-balancing action on the UE and the MBMS service would be interrupted.

All UEs that are interested in an MBMS service need to send an extra RRC MBMS INTEREST INDICATION after each RRC establishment. This causes a lot of signalling overhead. Further, every control plane signalling increases the risk of losing the connection between the UE and the network

### SUMMARY

It is therefore an object of embodiments herein to provide a way of decreasing the signalling overhead in MBMS multi carrier deployment scenarios. According to some embodiments, methods in network nodes and/or user nodes are provided for reducing signalling load in a multimedia broadcast multicast services, MBMS, network.

According to a first aspect of embodiments herein, the object is achieved by a method in a user node, which receivs from a network node a broadcasted system information block with information about at least one MBMS service supported by a current frequency for said service. The user node initiates a connection establishment procedure, the connection establishment procedure including one or more connection establishment messages sent between the user node and the network node to set up a connection. During the connection establishment procedure, the user node transmits an information to the network node in one of the one or more connection establishment messages indicating that the current frequency is a frequency of interest for the user node.

According to a second aspect of embodiments herein, the object is achieved by a method in a network node, which broadcasts to one or more user node(s) a broadcasted system information block with information about at least one MBMS service supported by a current frequency for said service. The network node further establishes a connection procedure with a user node, the connection establishment procedure including one or more connection establishment messages sent between the user node and the network node to set up a connection. During the connection establishment procedure, the network node receives an information from the user node in one of the one or more connection establishment messages indicating that the current frequency is a frequency of interest for the user node.

According to a third aspect of embodiments herein, the object is achieved by a user node, which includes a receiver adapted to receive from a network node a broadcasted system information block with information about at least one MBMS service supported by a current frequency for said service. The user node further includes a processing unit adapted to initiate a connection establishment procedure, the connection establishment procedure including one or more connection establishment messages sent between the user node and the network node to set up a connection. A transmitter in the user node is adapted, during the connection establishment procedure, to transmit an information to the network node in one of the one or more connection establishment messages indicating that the current frequency is a frequency of interest for the user node.

According to a fourth aspect of embodiments herein, the object is achieved by a network node, which includes a transmitter adapted to broadcast to one or more user node(s) a broadcasted system information block with information about at least one MBMS service supported by a current frequency for said service. The network node further includes a processing unit adapted to establish a connection procedure with a user node, the connection establishment procedure including one or more connection establishment messages sent between the user node and the network node to set up a connection. The network node also includes a receiver adapted, during the connection establishment procedure, to receive an information from the user node in one of the one or more connection establishment messages indicating that the current frequency is a frequency of interest for the user node.

Thanks to the provision of a specific information element (IE) or information bit in the RRC establishment procedure indicating that a current frequency is a frequency of MBMS interest, the RRC signalling load in MBMS multi carrier deployment scenarios is significantly reduced. This will also lead to fewer dropped UEs and saved battery consumption in the UE. Although the example described and discussed herein mainly concerns overlapping carriers in a multi carrier scenario, embodiments of the present invention could also be used in a single carrier scenario.

### BRIEF DESCRIPTION OF THE DRAWINGS

Examples of embodiments herein are described in more detail with reference to attached drawings in which:
Figure 1 is a communication network architecture in which embodiments of the present invention may be implemented;
Figure 2 is an exemplary user data service broadcasted over the air interface;
Figure 3 is a flowchart showing an exemplary procedure in a user node;
Figure 4 is a flowchart showing an exemplary procedure in a network node;
Figure 5 is a signalling diagram between a user node and a network node;
Figure 6 is a schematic block diagram showing a user node and a network node.

### DETAILED DESCRIPTION

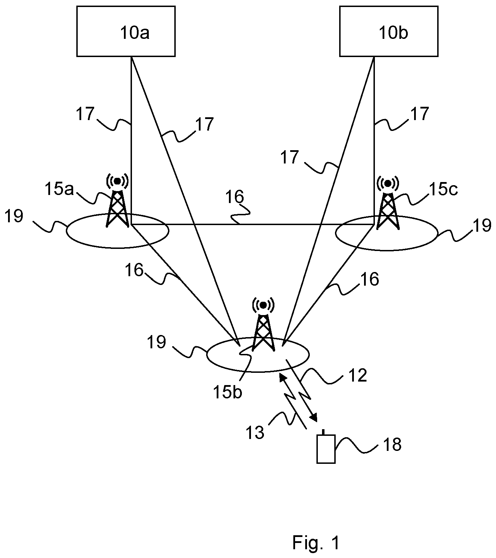

Figure 1 depicts a wireless radio network in which embodiments herein may be implemented. The wireless radio network is a wireless communication network such as a LTE network. The wireless communication network includes a Radio Access Network (RAN), such as E-UTRAN. The RAN comprises at least one network node, such as a Radio Base Station (RBS), which in the LTE system is called eNode B (eNB) 15a, 15b and 15c. The eNBs are connected over an interface such as the S1-interface 17 to at least one server gateway and mobility management entity node (S-GW/MME) 10a and 10b. The S-GW/MME node handles control signalling for instance for mobility, and is connected to external networks (not shown in fig. 1) such as the Public Switched Telephone Network (PSTN) or the Integrated Services Digital Network (ISDN), and/or a connectionless external network as the Internet.

The RAN provides communication and control for a plurality of user nodes or user equipments (UE) 18 (only one shown in fig. 1) and each eNB 15a - 15c is serving at least one cell 19 through and in which the UEs 18 are moving. The eNBs 15a - 15c are communicating with each other over a communication interface 16, such as X2. The UEs each uses downlink (DL) channels 12 and uplink (UL) channels 13 to communicate with at least one eNB over a radio or air interface.

According to one embodiment of the present invention, the communication system is herein described as a LTE system. The skilled person, however, realizes that the inventive method and arrangement work very well on other communications systems as well, such as GSM and WCDMA. The user equipments may be mobile stations such as mobile telephones ("cellular" telephones), tablets, and laptops with mobile termination and thus can be, for example, portable, pocket, hand-held, computer-included or car-mounted mobile devices which communicate voice and/or data with the RAN. The user equipment may also be a telemetry node, or any type of node communicating in a radio network system.

The wireless communication network covers a geographical area which is divided into cell areas 19, wherein each cell area being served by a base station 15, e.g. a Radio Base Station (RBS), which sometimes may be referred to as e.g. "eNB", "eNodeB", "NodeB", "B node", Base Transceiver Station (BTS), or AP(Access Point), depending on the technology and terminology used. The base stations may be of different classes such as e.g. macro NodeB, home NodeB or pico base station, based on transmission power and thereby also cell size. A cell is the geographical area where radio coverage is provided by the base station at a base station site. One base station, situated on the base station site, may serve one or several cells. Further, each base station may support one or several communication technologies. The base stations communicate over the air interface operating on radio frequencies with the user equipments within range of the base stations.

As stated above in the background section, Multimedia Broadcast Multicast Services (MBMS) is a point-to-multipoint interface specification for existing and upcoming 3GPP cellular networks which is designed to provide efficient delivery of broadcast and multicast services, such as to deliver sport game video content to a large number of mobile phone users or to deliver live TV contents etc.

3GPP has requested the following functionality for MBMS:
1) When entering RRC Connected Mode, the UE indicates the MBMS Interest by sending the RRC MBMS INTEREST INDICATION message
2) The eNB shall support the MBMS Service Acquisition by notifying all UEs about the availability of specific MBMS service areas per carrier in a system information block (SIB), such as SIB15;
3) the eNB shall react upon the UE's indicated MBMS Service preferences by means of Inter-Frequency HO.; and
4) This eNB shall also ensure MBMS Service continuity by preventing Inter-Frequency HO due to Load balancing.

The *MBMSInterestIndication* message is used to inform E-UTRAN that the UE is receiving/ interested to receive or no longer receiving/ interested to receive MBMS via an MRB.
Signalling radio bearer: SRB1
RLC-SAP: AM
Logical channel: DCCH
Direction: UE to E-UTRAN

### MBMSInterestIndication message

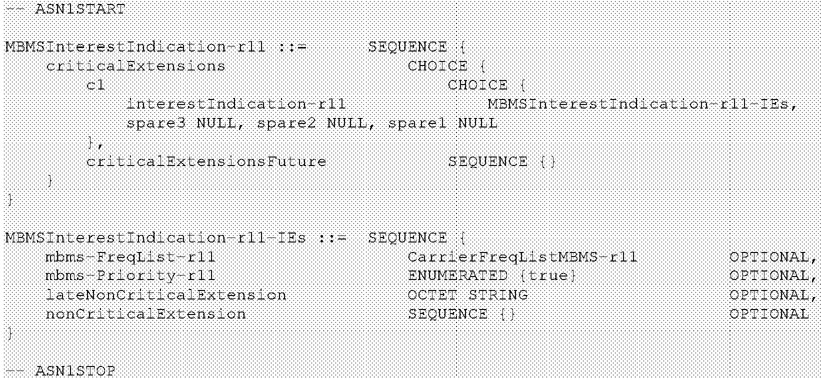

| ***MBMSInterestIndication* field descriptions** |
|---|
| ***mbms-FreqList*** |
| List of MBMS frequencies which the UE is receiving or interested to receive. |
| ***mbms-Priority*** |
| Indicates whether the UE prioritises MBMS reception above unicast reception. The field is present (i.e. value *true*), if the UE prioritises reception of all listed MBMS frequencies above reception of any of the unicast bearers. Otherwise the field is absent. |

The MBMS assistance information is a combination of service layer information and information from the RAN. The user service description (USD) in the service layer provides information about availability of the MBMS service which is identified by a temporary mobile group identity (TMGI).

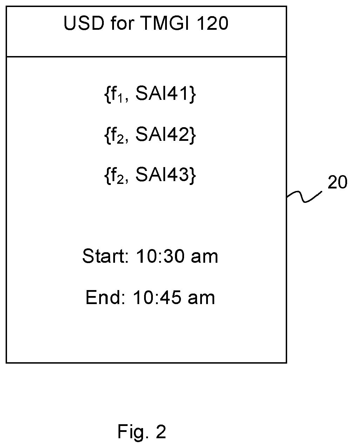

Figure 2 shows an example of a USD 20 for a specific TMGI, which in this example is TMGI 120. As can be seen in figure 2, the USD 20 includes MBMS service area identities (SAIs), MBMS frequency, and session start and end time.

A system information block (SIB), which is a new SIB called herein SIB15 is broadcasted by the RAN. In SIB15, all cells provide MBMS SAIs for the current frequency and also for neighboring frequencies where MBMS is provided.

Thus, based on the USD and SIB15, the UE knows when its MBMS service is provided and on which frequency.

When the UE is in IDLE state it has the possibility to change frequency itself. When the UE is interested in a MBMS service, such as a live TV event, and changes its state from IDLE mode to CONNECTED mode (to for example look for any new e-mails) it necessarily needs to inform the eNB about its interest in the frequency it currently is camping on. Without this knowledge, the eNB might perform a load-balancing action and interrupt the service. The UE thereafter initiates a connection establishment procedure. As discussed above in the background section, according to prior art the UE needs to send a separate RRC MBMS Interest Indication message after each RRC connection establishment procedure. According to embodiments of the present invention, the RRC establishment procedure is enhanced with a new one-bit information or a new information element, e.g. the MBMSlnterestlndication-r11-IEs, that gives the UE the possibility to indicate that the current frequency on which the UE is camping, is a frequency of MBMS interest. That is, the new one-bit information or the new information element is sent on an already sent message during the connection establishment procedure. Thus, the RRC signaling load in MBMS scenarios will be reduced, since no separate RRC MBMS Interest Indication message is sent.

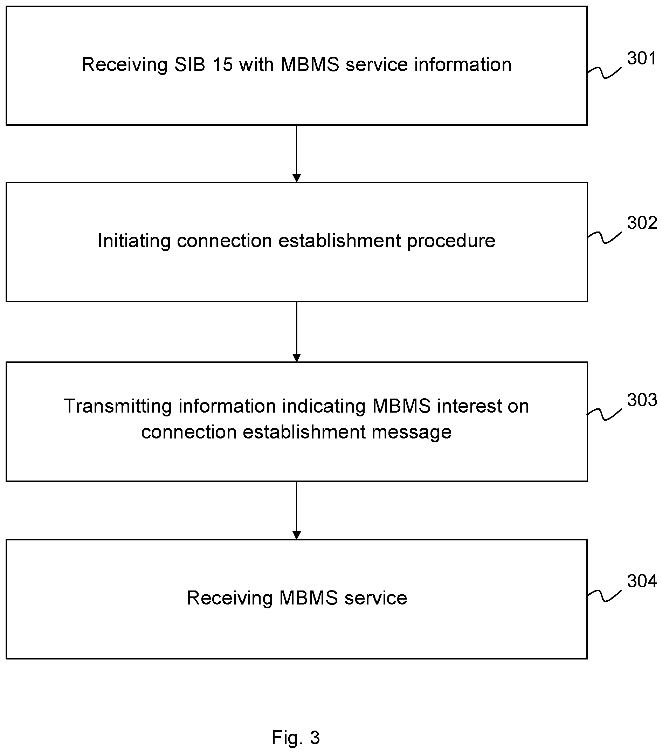

Example embodiments of the user node 18 for reducing a signalling load in a MBMS network, will now be described with reference to a flowchart depicted in figure 3.

The method comprises the following actions, which actions may be taken in any suitable order.

### Action 301

The user node 18 receives from a network node 15 a broadcasted system information block, such as SIB 15, with information about at least one MBMS service including a service area identifier supported by a current frequency for said service.

For example, in the system information block, all cells provide MBMS SAIs for the current frequency and also for neighboring frequencies where the MBMS service is provided.

According to some embodiments, the system information block is a system information block called SIB15.

### Action 302

The user node initiates a connection establishment procedure, the connection establishment procedure including one or more connection establishment messages sent between the user node 18 and the network node 15 to set up a connection.

For example, the user node 18 is in IDLE mode and wants to change its state to CONNECTED mode to be able to check for new e-mails or the like.

### Action 303

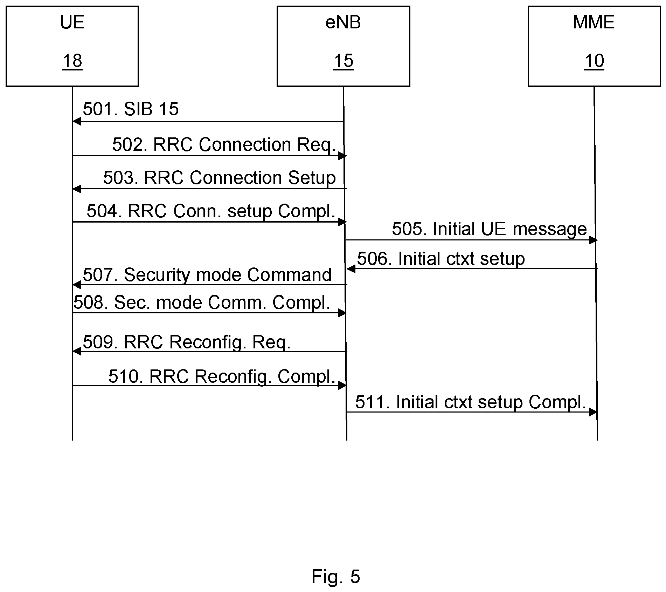

During the connection establishment procedure, the user node transmits an information to the network node 15 in one of the one or more connection establishment messages 502; 504; 510 (shown in Figure 5) indicating that the current frequency is a frequency of interest for the user node 18.

According to some embodiments, the one or more connection establishment messages is one of the following as shown in Figure 5: a RRC Connection Request message 502; a RRC Connection Setup Complete message 504; or a RRC Connection Reconfiguration Complete message 510.

According to some embodiments, the information is a one bit information.

According to some embodiments, the information is an information element (IE).

### Action 304

Optionally, the user node 18 also receives the MBMS service of interest.

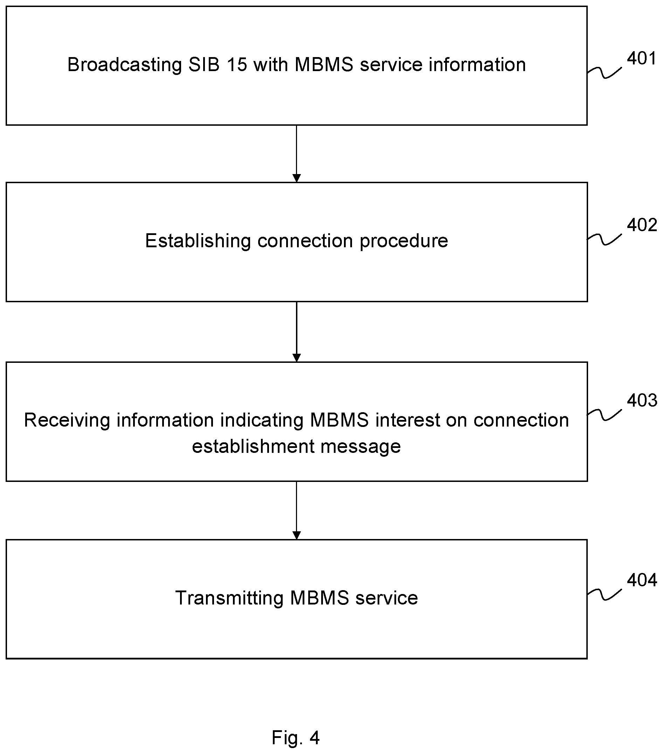

Example embodiments of the network node 15 for reducing a signalling load in a MBMS network, will now be described with reference to a flowchart depicted in figure 4.

The method comprises the following actions, which actions may be taken in any suitable order.

### Action 401

The network node 15, broadcasts to one or more user nodes 18 system information block with information about at least one MBMS service including a service area identifier supported by a current frequency for said service.

For example, in the system information block, all cells provide MBMS SAIs for the current frequency and also for neighboring frequencies where the MBMS service is provided.

According to some embodiments, the system information block is a system information block called SIB15.

### Action 402

The network node establishes a connection procedure with a user node 18, the connection establishment procedure including one or more connection establishment messages sent between the user node 18 and the network node 15 to set up a connection.

For example, the user node initiates the connection establishment procedure when it is in IDLE mode and wants to change its state to CONNECTED mode to be able to check for new e-mails or the like.

### Action 403

During the connection establishment procedure, the network node receives an information from the user node 18 in one of the one or more connection establishment messages 502; 504; 510 (shown in Figure 5) indicating that the current frequency is a frequency of interest for the user node 18. Thus, the network node has the knowledge that this particular user node is interested in this specific frequency and will not perform a load balancing action and move the user node to a different frequency.

According to some embodiments, the one or more connection establishment messages is one of the following as shown in Figure 5: a RRC Connection Request message 502; a RRC Connection Setup Complete message 504; or a RRC Connection Reconfiguration Complete message 510.

According to some embodiments, the information is a one bit information.

According to some embodiments, the information is an information element (IE).

### Action 404

Optionally, the network node 15 transmits the MBMS service to the user node 18.

Figure 5 is a signalling diagram showing an exemplary signalling between the user node, such as the UE 18, and the network node, such as an eNB 15. The exemplary signalling diagram shows a connection establishment procedure according to embodiments of the present invention. A connection establishment procedure between a UE 18 and an eNB 15 is, however, not limited to the signalling as shown in Figure 5 but may have more signalling which has been omitted from the shown diagram.

In 501, the eNB 15, broadcasts to one or more UEs 18 system information block with information about at least one MBMS service including a service area identifier supported by a current frequency for said service. This is broadcasted on SIB 15 as discussed above.

The UE 18 initiates the connection establishment procedure by sending a RRC Connection Request message 502 to the eNB 15. Optionally, an information indicating that the current frequency is a frequency of interest for the UE 18 is sent with this message 502 as a one-bit information to the eNB 15.

The eNB 15 sends a RRC Connection Setup message 502 back to the UE 18, whereby the UE 18 send a RRC Connection Setup Complete message 504. Optionally, the information indicating that the current frequency is a frequency of interest for the UE 18 is sent with this message 504 as a one-bit information or an information element to the eNB 15.

The eNB sends an Initial UE message 505 to the MME 10 and receives an Initial Context Setup message 506 back from the MME 10, which for example informs the eNB about the UE capabilities.

The eNB 15 sends a Security mode Command message 507 to the UE 18 and receives a Security mode Command Complete message 508 back.

Thereafter, the eNB 15 sends a RRC Reconfiguration Request message 509 to the UE 18. The UE 18 sends a RRC Reconfiguration Complete message 510 to the eNB 18 and, optionally, includes the information indicating that the current frequency is a frequency of interest for the UE 18 in this message 510 as a one-bit information or an information element.

Finally, the eNB 15 sends an Initial Context Setup Complete message 511 to the MME 10 when the connection establishment procedure is terminated.

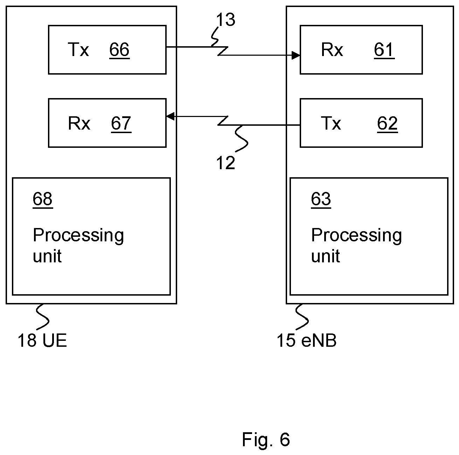

Figure 6 is a block diagram showing a user node, such as a user equipment 18, and a network node 15, such as eNB. The shown network node and user node being used for reducing signalling load in a multimedia broadcast multicast services, MBMS, network.

The network node 15 comprises a radio transmitter 62 and a receiver 61. The network node further includes a processing unit 63. The transmitter 62 is adapted to broadcast to one or more user node(s) 18 a system information block with information about at least one MBMS service supported by a current frequency for said service. The processing unit 63 is adapted to establish a connection procedure with a user node 18, the connection establishment procedure including one or more connection establishment messages sent between the user node 18 and the network node 15 to set up a connection. The receiver 61 is adapted, during the connection establishment procedure, to receive an information from the user node 18 in one of the one or more connection establishment messages 502; 504; 510 (shown in Figure 5) indicating that the current frequency is a frequency of interest for the user node 18.

The user node 18 comprises a radio transmitter 66 and a receiver 67. The user node 18 further includes a processing unit 68. The receiver 67 is adapted to receive from a network node 15 a broadcasted system information block with information about at least one MBMS service supported by a current frequency for said service. The processing unit 68 is adapted to initiate a connection establishment procedure, the connection establishment procedure including one or more connection establishment messages sent between the user node 18 and the network node 15 to set up a connection. The transmitter 66 is adapted, during the connection establishment procedure, to transmit an information to the network node 15 in one of the one or more connection establishment messages 502; 504; 510 (shown in Figure 5) indicating that the current frequency is a frequency of interest for the user node 18.

It will be appreciated that at least some of the procedures described above are carried out repetitively as necessary to respond to the time-varying characteristics of the channel between the transmitter and the receiver. To facilitate understanding, many aspects of the invention are described in terms of sequences of actions to be performed by, for example, elements of a programmable computer system. It will be recognized that the various actions could be performed by specialized circuits (e.g. discrete logic gates interconnected to perform a specialized function or application-specific integrated circuits), by program instructions executed by one or more processors, or a combination of both.

Moreover, the invention can additionally be considered to be embodied entirely within any form of computer-readable storage medium having stored therein an appropriate set of instructions for use by or in connection with an instruction-execution system, apparatus or device, such as computer-based system, processor-containing system, or other system that can fetch instructions from a medium and execute the instructions. As used here, a "computer-readable medium" can be any means that can contain, store, communicate, propagate, or transport the program for use by or in connection with the instruction-execution system, apparatus or device. The computer-readable medium can be, for example but not limited to, an electronic, magnetic, optical, electromagnetic, infrared, or semiconductor system, apparatus, device or propagation medium. More specific examples (a non-exhaustive list) of the computer-readable medium include an electrical connection having one or more wires, a portable computer diskette, a random access memory (RAM), a read only memory (ROM), an erasable programmable read only memory (EPROM or Flash memory), an optical fibre, and a portable compact disc read only memory (CD-ROM).

Thus, while there have been shown and described and pointed out fundamental novel features of the invention as applied to a preferred embodiment thereof, it will be understood that various omissions and substitutions and changes in the form and details of the devices illustrated, and in their operation, may be made by those skilled in the art without departing from the spirit of the invention. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

When using the words "comprise", "comprising", "including" or "includes" they shall be interpreted as non- limiting, i.e. meaning "consist at least of".

## Claims

1. A method in a user node (18) for reducing signalling load in a multimedia broadcast multicast services, MBMS, network, the method comprising:
*receiving* (301) from a network node (15) a broadcasted system information block with information about at least one MBMS service supported by a current frequency for said service;
*initiating* (302) a connection establishment procedure, the connection establishment procedure including one or more connection establishment messages sent between the user node (18) and the network node (15) to set up a connection; and
during the connection establishment procedure, *transmitting* (303) an information to the network node (15) in one of the one or more connection establishment messages (502; 504; 510) indicating that the current frequency is a frequency of interest for the user node (18).

2. The method according to claim 1, wherein the one or more connection establishment messages is one of the following: a RRC Connection Request message (502); a RRC Connection Setup Complete message (504); or a RRC Connection Reconfiguration Complete message (510).

3. The method according to claim 1, wherein the system information block includes information of at least one MBMS service area identification for the current frequency.

4. The method according to claim 3, wherein the system information block further includes at least one MBMS service area identification for frequencies in neighboring cells where the MBMS service is provided.

5. The method according to claim 1, wherein the information is a one-bit information.

6. The method according to claim 1, wherein the information is an information element.

7. A method in a network node (15) for reducing signalling load in a multimedia broadcast multicast services, MBMS, network, the method comprising:
*broadcasting* (401) to one or more user node(s) (18) a broadcasted system information block with information about at least one MBMS service supported by a current frequency for said service;
*establishing* (402) a connection procedure with a user node (18), the connection establishment procedure including one or more connection establishment messages sent between the user node (18) and the network node (15) to set up a connection; and
during the connection establishment procedure, *receiving* (403) an information from the user node (18) in one of the one or more connection establishment messages (502; 504; 510) indicating that the current frequency is a frequency of interest for the user node (18).

8. The method according to claim 7, wherein the one or more connection establishment messages is one of the following: a RRC Connection Request message (502); a RRC Connection Setup Complete message (504); or a RRC Connection Reconfiguration Complete message (510).

9. The method according to claim 7, wherein the system information block includes information of at least one MBMS service area identification for the current frequency.

10. The method according to claim 9, wherein the system information block further includes at least one MBMS service area identification for frequencies in neighboring cells where the MBMS service is provided.

11. The method according to claim 7, wherein the information element is a one-bit information.

12. The method according to claim 7, wherein the information element is an information element.

13. A user node (18) for reducing signalling load in a multimedia broadcast multicast services, MBMS, network, the user node (18) comprising:
a receiver (67) adapted to receive from a network node (15) a broadcasted system information block with information about at least one MBMS service supported by a current frequency for said service;
a processing unit (68) adapted to initiate a connection establishment procedure, the connection establishment procedure including one or more connection establishment messages sent between the user node (18) and the network node (15) to set up a connection; and
a transmitter (66) adapted, during the connection establishment procedure, to transmit an information to the network node (15) in one of the one or more connection establishment messages (502; 504; 510) indicating that the current frequency is a frequency of interest for the user node (18).

14. The user node (18) according to claim 13, wherein the one or more connection establishment messages is one of the following: a RRC Connection Request message (502); a RRC Connection Setup Complete message (504); or a RRC Connection Reconfiguration Complete message (510).

15. The user node (18) according to claim 13, wherein the system information block includes information of at least one MBMS service area identification for the current frequency.

16. The user node (18) according to claim 15, wherein the system information block further includes at least one MBMS service area identification for frequencies in neighboring cells where the MBMS service is provided.

17. The user node (18) according to claim 13, wherein the information is a one-bit information.

18. The user node (18) according to claim 13, wherein the information is an information element.

19. A network node (15) for reducing signalling load in a multimedia broadcast multicast services, MBMS, network, the network node comprising:
a transmitter (62) adapted to broadcast to one or more user node(s) (18) a broadcasted system information block with information about at least one MBMS service supported by a current frequency for said service;
a processing unit (63) adapted to establish a connection procedure with a user node (18), the connection establishment procedure including one or more connection establishment messages sent between the user node (18) and the network node (15) to set up a connection; and
a receiver (61) adapted, during the connection establishment procedure, to receive an information from the user node (18) in one of the one or more connection establishment messages (502; 504; 510) indicating that the current frequency is a frequency of interest for the user node (18).

20. The network node (15) according to claim 19, wherein the one or more connection establishment messages is one of the following: a RRC Connection Request message (502); a RRC Connection Setup Complete message (504); or a RRC Connection Reconfiguration Complete message (510).

21. The network node (15) according to claim 19, wherein the system information block includes information of at least one MBMS service area identification for the current frequency.

22. The network node (15) according to claim 21, wherein the system information block further includes at least one MBMS service area identification for frequencies in neighboring cells where the MBMS service is provided.

23. The network node (15) according to claim 19, wherein the information is a one-bit information.

24. The network node (15) according to claim 19, wherein the information is an information element.

## Patentansprüche

1. Verfahren in einem Benutzerknoten (18) zum Verringern der Signalisierungslast in einem Netzwerk mit Multimedia-Rundsende/Gruppensendediensten, MBMS, wobei das Verfahren umfasst:
*Empfangen* (301) eines rundgesendeten Systeminformationsblocks mit Information über mindestens einen MBMS-Dienst, der durch eine aktuelle Frequenz für diesen Dienst unterstützt wird, von einem Netzwerkknoten (15);
*Einleiten* (302) einer Verbindungsaufbauprozedur, wobei die Verbindungsaufbauprozedur eine oder mehrere Verbindungsaufbaunachrichten einschließt, die zwischen dem Benutzerknoten (18) und dem Netzwerkknoten (15) gesendet werden, um eine Verbindung aufzubauen; und
während der Verbindungsaufbauprozedur erfolgendes *übertragen* (303) einer Information zum Netzwerkknoten (15) in einer der einen oder mehreren Verbindungsaufbaunachrichten (502; 504; 510), die angibt, dass die aktuelle Frequenz eine für den Benutzerknoten (18) in Betracht kommende Frequenz ist.

2. Verfahren nach Anspruch 1, worin die eine oder mehreren Verbindungsaufbaunachrichten eines von Folgendem sind: eine RRC-Verbindungsaufforderungsnachricht (502); eine RRC-Verbindungsaufbauabschlussnachricht (504); oder eine RRC-Verbindungsneukonfigurationsabschlussnachricht (510).

3. Verfahren nach Anspruch 1, worin der Systeminformationsblock Information über mindestens eine MBMS-Dienstbereichskennung für die aktuelle Frequenz einschließt.

4. Verfahren nach Anspruch 3, worin der Systeminformationsblock ferner mindestens eine MBMS-Dienstbereichskennung für Frequenzen in benachbarten Zellen einschließt, wo der MBMS-Dienst bereitgestellt wird.

5. Verfahren nach Anspruch 1, worin die Information eine Ein-Bit-Information ist.

6. Verfahren nach Anspruch 1, worin die Information ein Informationselement ist.

7. Verfahren in einem Netzwerkknoten (15) zum Verringern der Signalisierungslast in einem Netzwerk mit Multimedia-Rundsende/Gruppensendediensten, MBMS, wobei das Verfahren umfasst:
*Rundsenden* (401) eines rundgesendeten Systeminformationsblocks mit Information über mindestens einen MBMS-Dienst, der durch eine aktuelle Frequenz für diesen Dienst unterstützt wird, an einen oder mehrere Benutzerknoten (18);
*Einrichten* (402) einer Verbindungsprozedur mit einem Benutzerknoten (18), wobei die Verbindungsaufbauprozedur eine oder mehrere Verbindungsaufbaunachrichten einschließt, die zwischen dem Benutzerknoten (18) und dem Netzwerkknoten (15) gesendet werden, um eine Verbindung aufzubauen; und
während der Verbindungsaufbauprozedur erfolgendes *Empfangen* (403) einer Information vom Benutzerknoten (18) in einer der einen oder mehreren Verbindungsaufbaunachrichten (502; 504; 510), die angibt, dass die aktuelle Frequenz eine für den Benutzerknoten (18) in Betracht kommende Frequenz ist.

8. Verfahren nach Anspruch 7, worin die eine oder mehreren Verbindungsaufbaunachrichten eines von Folgendem sind: eine RRC-Verbindungsaufforderungsnachricht (502); eine RRC-Verbindungsaufbauabschlussnachricht (504); oder eine RRC-Verbindungsneukonfigurationsabschlussnachricht (510).

9. Verfahren nach Anspruch 7, worin der Systeminformationsblock Information über mindestens eine MBMS-Dienstbereichskennung für die aktuelle Frequenz einschließt.

10. Verfahren nach Anspruch 9, worin der Systeminformationsblock ferner mindestens eine MBMS-Dienstbereichskennung für Frequenzen in benachbarten Zellen einschließt, wo der MBMS-Dienst bereitgestellt wird.

11. Verfahren nach Anspruch 7, worin die Information eine Ein-Bit-Information ist.

12. Verfahren nach Anspruch 7, worin die Information ein Informationselement ist.

13. Benutzerknoten (18) zum Verringern der Signalisierungslast in einem Netzwerk mit Multimedia-Rundsende/Gruppensendediensten, MBMS, wobei der Benutzerknoten (18) umfasst:
einen Empfänger (67), der dafür eingerichtet ist, von einem Netzwerkknoten (15) einen rundgesendeten Systeminformationsblock mit Information über mindestens einen MBMS-Dienst, der durch eine aktuelle Frequenz für diesen Dienst unterstützt wird, zu empfangen;
eine Verarbeitungseinheit (68), die dafür eingerichtet ist, eine Verbindungsaufbauprozedur einzuleiten, wobei die Verbindungsaufbauprozedur eine oder mehrere Verbindungsaufbaunachrichten einschließt, die zwischen dem Benutzerknoten (18) und dem Netzwerkknoten (15) gesendet werden, um eine Verbindung aufzubauen; und
einen Sender (66), der dafür eingerichtet ist, während der Verbindungsaufbauprozedur in einer der einen oder mehreren Verbindungsaufbaunachrichten (502; 504; 510) zum Netzwerkknoten (15) eine Information zu übertragen, die angibt, dass die aktuelle Frequenz eine für den Benutzerknoten (18) in Betracht kommende Frequenz ist.

14. Benutzerknoten (18) nach Anspruch 13, worin die eine oder mehreren Verbindungsaufbaunachrichten eines von Folgendem sind: eine RRC-Verbindungsaufforderungsnachricht (502); eine RRC-Verbindungsaufbauabschlussnachricht (504); oder eine RRC-Verbindungsneukonfigurationsabschlussnachricht (510).

15. Benutzerknoten (18) nach Anspruch 13, worin der Systeminformationsblock Information über mindestens eine MBMS-Dienstbereichskennung für die aktuelle Frequenz einschließt.

16. Benutzerknoten (18) nach Anspruch 15, worin der Systeminformationsblock ferner mindestens eine MBMS-Dienstbereichskennung für Frequenzen in benachbarten Zellen einschließt, wo der MBMS-Dienst bereitgestellt wird.

17. Benutzerknoten (18) nach Anspruch 13, worin die Information eine Ein-Bit-Information ist.

18. Benutzerknoten (18) nach Anspruch 13, worin die Information ein Informationselement ist.

19. Netzwerkknoten (15) zum Verringern der Signalisierungslast in einem Netzwerk mit Multimedia-Rundsende/Gruppensendediensten, MBMS, wobei der Netzwerkknoten umfasst:
einen Sender (62), der dafür eingerichtet ist, einen rundgesendeten Systeminformationsblock mit Information über mindestens einen MBMS-Dienst, der durch eine aktuelle Frequenz für diesen Dienst unterstützt wird, an einen oder mehrere Benutzerknoten (18) rundzusenden;
eine Verarbeitungseinheit (63), die dafür eingerichtet ist, eine Verbindungsprozedur mit einem Benutzerknoten (18) einzurichten, wobei die Verbindungsaufbauprozedur eine oder mehrere Verbindungsaufbaunachrichten einschließt, die zwischen dem Benutzerknoten (18) und dem Netzwerkknoten (15) gesendet werden, um eine Verbindung aufzubauen; und
einen Empfänger (61), der dafür eingerichtet ist, während der Verbindungsaufbauprozedur in einer der einen oder mehreren Verbindungsaufbaunachrichten (502; 504; 510) vom Benutzerknoten (18) eine Information zu empfangen, die angibt, dass die aktuelle Frequenz eine für den Benutzerknoten (18) in Betracht kommende Frequenz ist.

20. Netzwerkknoten (15) nach Anspruch 19, worin die eine oder mehreren Verbindungsaufbaunachrichten eines von Folgendem sind: eine RRC-Verbindungsaufforderungsnachricht (502); eine RRC-Verbindungsaufbauabschlussnachricht (504); oder eine RRC-Verbindungsneukonfigurationsabschlussnachricht (510).

21. Netzwerkknoten (15) nach Anspruch 19, worin der Systeminformationsblock Information über mindestens eine MBMS-Dienstbereichskennung für die aktuelle Frequenz einschließt.

22. Netzwerkknoten (15) nach Anspruch 21, worin der Systeminformationsblock ferner mindestens eine MBMS-Dienstbereichskennung für Frequenzen in benachbarten Zellen einschließt, wo der MBMS-Dienst bereitgestellt wird.

23. Netzwerkknoten (15) nach Anspruch 19, worin die Information eine Ein-Bit-Information ist.

24. Netzwerkknoten (15) nach Anspruch 19, worin die Information ein Informationselement ist.

## Revendications

1. Procédé, mis en oeuvre dans un noeud d'utilisateur (18), de réduction de charge de signalisation dans un réseau de services de diffusion-multidiffusion multimédia, MBMS, le procédé comprenant les étapes ci-dessous consistant à :
*recevoir* (301), en provenance d'un noeud de réseau (15), un bloc d'informations de système diffusé, avec des informations concernant au moins un service de diffusion MBMS pris en charge par une fréquence en cours pour ledit service ;
*initier* (302) une procédure d'établissement de connexion, la procédure d'établissement de connexion incluant un ou plusieurs messages d'établissement de connexion envoyés entre le noeud d'utilisateur (18) et le noeud de réseau (15) en vue d'établir une connexion ; et
au cours de la procédure d'établissement de connexion, *transmettre* (303) des informations, au noeud de réseau (15), dans l'un dudit un ou desdits plusieurs messages d'établissement de connexion (502 ; 504 ; 510), indiquant que la fréquence en cours est une fréquence d'intérêt pour le noeud d'utilisateur (18).

2. Procédé selon la revendication 1, dans lequel ledit un ou lesdits plusieurs messages d'établissement de connexion correspondent à l'un des messages suivants : un message de demande de connexion de gestion des ressources radioélectriques RCC, « RRC Connection Request » (502) ; un message d'achèvement d'établissement de connexion RCC « RRC Connection Setup Complete » (504) ; ou un message d'achèvement de reconfiguration de connexion RCC « RRC Connection Reconfiguration Complete » (510).

3. Procédé selon la revendication 1, dans lequel le bloc d'informations de système inclut des informations d'au moins une identification de zone de service de diffusion MBMS pour la fréquence en cours.

4. Procédé selon la revendication 3, dans lequel le bloc d'informations de système inclut en outre au moins une identification de zone de service de diffusion MBMS pour des fréquences dans des cellules voisines où le service de diffusion MBMS est fourni.

5. Procédé selon la revendication 1, dans lequel les informations correspondent à des informations ne contenant qu'un seul bit.

6. Procédé selon la revendication 1, dans lequel les informations correspondent à un élément d'information.

7. Procédé, mis en oeuvre dans un noeud de réseau (15), de réduction de charge de signalisation dans un réseau de services de diffusion-multidiffusion multimédia, MBMS, le procédé comprenant les étapes ci-dessous consistant à :
*diffuser* (401), à un ou plusieurs noeuds d'utilisateur (18), un bloc d'informations de système diffusé, avec des informations concernant au moins un service de diffusion MBMS pris en charge par une fréquence en cours pour ledit service ;
*établir* (402) une procédure de connexion avec un noeud d'utilisateur (18), la procédure d'établissement de connexion incluant un ou plusieurs messages d'établissement de connexion envoyés entre le noeud d'utilisateur (18) et le noeud de réseau (15) en vue d'établir une connexion ; et
au cours de la procédure d'établissement de connexion, *recevoir* (403) des informations, en provenance d'un noeud d'utilisateur (18), dans l'un dudit un ou desdits plusieurs messages d'établissement de connexion (502; 504; 510), indiquant que la fréquence en cours est une fréquence d'intérêt pour le noeud d'utilisateur (18).

8. Procédé selon la revendication 7, dans lequel ledit un ou lesdits plusieurs messages d'établissement de connexion correspondent à l'un des messages suivants : un message de demande de connexion de gestion des ressources radioélectriques RCC, « RRC Connection Request » (502) ; un message d'achèvement d'établissement de connexion RCC « RRC Connection Setup Complete » (504) ; ou un message d'achèvement de reconfiguration de connexion RCC « RRC Connection Reconfiguration Complete » (510).

9. Procédé selon la revendication 7, dans lequel le bloc d'informations de système inclut des informations d'au moins une identification de zone de service de diffusion MBMS pour la fréquence en cours.

10. Procédé selon la revendication 9, dans lequel le bloc d'informations de système inclut en outre au moins une identification de zone de service de diffusion MBMS pour des fréquences dans des cellules voisines où le service de diffusion MBMS est fourni.

11. Procédé selon la revendication 7, dans lequel les informations correspondent à des informations ne contenant qu'un seul bit.

12. Procédé selon la revendication 7, dans lequel les informations correspondent à un élément d'information.

13. Noeud d'utilisateur (18) destiné à réduire une charge de signalisation dans un réseau de services de diffusion-multidiffusion multimédia, MBMS, le noeud d'utilisateur (18) comprenant :
un récepteur (67) apte à recevoir, en provenance d'un noeud de réseau (15), un bloc d'informations de système diffusé, avec des informations concernant au moins un service de diffusion MBMS pris en charge par une fréquence en cours pour ledit service ;
une unité de traitement (68) apte à initier une procédure d'établissement de connexion, la procédure d'établissement de connexion incluant un ou plusieurs messages d'établissement de connexion envoyés entre le noeud d'utilisateur (18) et le noeud de réseau (15) en vue d'établir une connexion ; et
un émetteur (66) apte à, au cours de la procédure d'établissement de connexion, transmettre des informations au noeud de réseau (15), dans l'un dudit un ou desdits plusieurs messages d'établissement de connexion (502; 504; 510), indiquant que la fréquence en cours est une fréquence d'intérêt pour le noeud d'utilisateur (18).

14. Noeud d'utilisateur (18) selon la revendication 13, dans lequel ledit un ou lesdits plusieurs messages d'établissement de connexion correspondent à l'un des messages suivants : un message de demande de connexion de gestion des ressources radioélectriques RCC, « RRC Connection Request » (502) ; un message d'achèvement d'établissement de connexion RCC « RRC Connection Setup Complete » (504) ; ou un message d'achèvement de reconfiguration de connexion RCC « RRC Connection Reconfiguration Complete » (510).

15. Noeud d'utilisateur (18) selon la revendication 13, dans lequel le bloc d'informations de système inclut des informations d'au moins une identification de zone de service de diffusion MBMS pour la fréquence en cours.

16. Noeud d'utilisateur (18) selon la revendication 15, dans lequel le bloc d'informations de système inclut en outre au moins une identification de zone de service de diffusion MBMS pour des fréquences dans des cellules voisines où le service de diffusion MBMS est fourni.

17. Noeud d'utilisateur (18) selon la revendication 13, dans lequel les informations correspondent à des informations ne contenant qu'un seul bit.

18. Noeud d'utilisateur (18) selon la revendication 13, dans lequel les informations correspondent à un élément d'information.

19. Noeud de réseau (15) destiné à réduire une charge de signalisation dans un réseau de services de diffusion-multidiffusion multimédia, MBMS, le noeud de réseau comprenant :
un émetteur (62) apte à diffuser, à un ou plusieurs noeuds d'utilisateur (18), un bloc d'informations de système diffusé, avec des informations concernant au moins un service de diffusion MBMS pris en charge par une fréquence en cours pour ledit service ;
une unité de traitement (63) apte à établir une procédure de connexion avec un noeud d'utilisateur (18), la procédure d'établissement de connexion incluant un ou plusieurs messages d'établissement de connexion envoyés entre le noeud d'utilisateur (18) et le noeud de réseau (15) en vue d'établir une connexion ; et
un récepteur (61) apte à, au cours de la procédure d'établissement de connexion, recevoir des informations, en provenance du noeud d'utilisateur (18), dans l'un dudit un ou desdits plusieurs messages d'établissement de connexion (502 ; 504 ; 510), indiquant que la fréquence en cours est une fréquence d'intérêt pour le noeud d'utilisateur (18).

20. Noeud de réseau (15) selon la revendication 19, dans lequel ledit un ou lesdits plusieurs messages d'établissement de connexion correspondent à l'un des messages suivants : un message de demande de connexion de gestion des ressources radioélectriques RCC, « RRC Connection Request » (502) ; un message d'achèvement d'établissement de connexion RCC « RRC Connection Setup Complete » (504) ; ou un message d'achèvement de reconfiguration de connexion RCC « RRC Connection Reconfiguration Complete » (510).

21. Noeud de réseau (15) selon la revendication 19, dans lequel le bloc d'informations de système inclut des informations d'au moins une identification de zone de service de diffusion MBMS pour la fréquence en cours.

22. Noeud de réseau (15) selon la revendication 21, dans lequel le bloc d'informations de système inclut en outre au moins une identification de zone de service de diffusion MBMS pour des fréquences dans des cellules voisines où le service de diffusion MBMS est fourni.

23. Noeud de réseau (15) selon la revendication 19, dans lequel les informations correspondent à des informations ne contenant qu'un seul bit.

24. Noeud de réseau (15) selon la revendication 19, dans lequel les informations correspondent à un élément d'information.
